# FASCICULE DE BREVET EUROPEEN

(11) **EP 0 586 290 B1**
(45) Date de publication et mention de la délivrance du brevet: **01.05.1996**
(21) Numéro de dépôt: 93402108.0
(22) Date de dépôt: 27.08.1993
(51) Int. Cl.: F16F 15/12

(54) **Amortisseur de torsion, notamment disque de friction d'embrayage pour véhicule automobile**
Torsionsdämpfer, insbesondere Kupplungsscheibe für Kraftfahrzeug
Torsional damper, in particular clutch friction disk for automotive vehicle

(30) Priorité: 02.09.1992 FR 9210473
(43) Date de publication de la demande: 09.03.1994
(73) Titulaire: VALEO, F-75848 Paris Cédex 17 (FR)
(72) Inventeur: Pfefferkorn, Wienfried, D-9801 Schneidenbach (Bei Reichenbach) (DE); Rumignani, Paolo, F-60300 Senlis (FR)
(74) Mandataire: Gamonal, Didier

(56) Documents cités:
- EP-A- 0 475 283
- FR-A- 1 525 291
- FR-A- 2 540 583
- FR-A- 2 560 954
- US-A- 4 493 408
- US-A- 4 944 499

## Description

La présente invention concerne les amortisseurs de torsion, notamment les disques de friction d'embrayage pour véhicule automobile, comportant un élément d'entrée, deux rondelles de guidage solidaires de l'élément d'entrée, un voile annulaire encadré par les rondelles de guidage, des premiers organes élastiques d'une part, interposés circonférentiellement entre le voile et les rondelles de guidage et d'autre part, portés par les rondelles de guidage en étant montés à jeu dans des premiers logements du voile, des plaques de réaction globalement de forme annulaire, disposées de part et d'autre du voile en étant encadrées par les rondelles de guidage, des seconds organes élastiques, au moins en partie de plus faible raideur que les premiers organes élastiques, interposés circonférentiellement entre les plaques de réaction et le voile, des moyens d'entraînement intervenant entre les plaques de réaction et au moins une partie des premiers organes élastiques, des moyens de frottement à serrage élastique intervenant entre les rondelles de guidage et les plaques de réaction, un élément de sortie sous forme d'un moyeu solidaire du voile en étant entouré de manière rotative par les rondelles de guidage et les plaques de réaction.

Un tel amortisseur est décrit dans le document EP-A-0 475 283 et son correspondant US-A-5,209,334, qui divulgue (figures 8 et 9) un amortisseur avec des seconds organes élastiques implantés radialement en dessous des premiers organes élastiques et des moyens de frottement à serrage élastique qui comportent au moins une première rondelle élastique à action axiale, qui sollicite axialement les plaques de réaction en direction du voile pour induire un frottement entre lesdites plaques et le voile, en sorte que les plaques de réaction sont distinctes l'une de l'autre.

Ainsi le voile a une bonne résistance mécanique, les seconds organes élastiques sont ménagés lorsque les premiers organes élastiques interviennent et les plaques de réaction ont une double fonction à savoir, une fonction de rondelle de guidage pour les seconds organes élastiques et une fonction de frottement avec le voile.

Elles suivent le mouvement du voile lors de l'intervention en différé des premiers organes élastiques.

Dans ce mode de réalisation on contrôle mal les frottements.

En effet, les plaques de réaction sont en partie métalliques et en partie en matière plastique. Par leur partie métallique elles sont conformées pour frotter, après intervention des premiers organes élastiques, respectivement contre l'un des rondelle de guidage et contre la première rondelle élastique.

Par leur partie en matière plastique elles sont adaptées à frotter contre le voile lors de l'intervention des seconds organes élastiques.

La présente invention a pour objet de palier cet inconvénient, sans affaiblir outre mesure le voile, tout en conservant la structure des plaques de réaction.

Suivant l'invention un amortisseur du type sus-indiqué est caractérisé en ce que chaque plaque de réaction est en contact de frottement avec une rondelle de frottement calée en rotation sur la rondelle de guidage concernée, en ce que ladite première rondelle élastique est interposée axialement entre l'une des rondelles de guidage, dite première rondelle de guidage, et l'une des rondelles de frottement, dite, première rondelle de frottement, en ce que l'autre rondelle de frottement, dite seconde rondelle de frottement, est calée axialement sur l'autre rondelle de guidage, dite seconde rondelle de guidage, et appartient à une entretoise de frottement comportant un empilage de rondelle, dont l'une constitue une troisième rondelle de frottement et est propre à venir en prise avec le voile pour induire un frottement au contact de la deuxième rondelle de guidage ou de la deuxième rondelle de frottement et en ce que la troisième rondelle de frottement est soumise à l'action d'au moins une seconde rondelle élastique à action axiale agissant axialement entre la seconde rondelle de frottement et la seconde rondelle de guidage.

Grâce à l'invention on maîtrise bien le serrage des plaques de réaction, car notamment la première rondelle élastique n'agit pas directement sur la plaque de réaction concernée.

En outre, grâce à l'entretoise de frottement présentant la seconde rondelle de frottement calée axialement sur la seconde rondelle de guidage, la seconde rondelle élastique ne fait pas sentir ses effets sur les plaques de réaction lors de l'intervention des seconds organes élastiques.

On peut donc choisir cette seconde rondelle élastique selon les applications pour obtenir le frottement désiré. Il en est de même de la première rondelle élastique.

En outre, la résistance du voile demeure inchangée ainsi que la structure des plaques de réaction. On contrôle bien ainsi les différents frottements.

Grâce à l'invention on peut prévoir un système d'hystérésis indépendant actionné de manière différée (après rattrapage d'un jeu) par le voile. Dans une réalisation ce système peut être associé aux premiers organes élastiques et actionné par le voile au moment d'attaquer les premiers organes élastiques, après ou avant saturation des seconds organes élastiques de deuxième étage.

En variante, ce système peut être indépendant des premiers organes élastiques et être actionné de manière différée par le voile.

Il est possible de constituer une cassette d'hystérésis avec une entretoise de frottement calée en rotation sur l'une des rondelles de guidage et formant un sous-ensemble unitaire avec la rondelle de guidage à laquelle elle est associée.

Tout ceci est avantageux sur le plan de la filtration des vibrations.

La seconde rondelle élastique dans une réalisation sollicite la troisième rondelle de frottement, ainsi que l'entretoise de frottement en direction de la rondelle de guidage concernée pour liaison axiale de ladite entretoise et de la deuxième rondelle de frottement avec la deuxième rondelle de guidage. Cette deuxième rondelle élastique prend appui sur un épaulement appartenant à la deuxième rondelle de frottement. Elle prend également appui sur la deuxième rondelle de guidage en étant montés à l'intérieur ou à l'extérieur du volume délimité par les rondelles de guidage.

Dans une forme de réalisation les plaques de réaction sont entièrement en matière plastique et viennent en contact direct avec le voile. Cela permet de réduire les bruits et d'avoir une bonne assise pour les premiers organes élastiques. La deuxième rondelle élastique permet de rattraper les jeux dus aux usures des différentes pièces sans exercer une action de serrage sur les plaques de réaction et donc sans contrarier l'action de la première rondelle élastique. Un grand nombre de solutions sont permis, en particulier la deuxième rondelle de frottement peut être fixée directement sur la rondelle de guidage par exemple par sertissage. Dans ce cas on peut implanter axialement la seconde rondelle élastique entre la deuxième rondelle de guidage et la deuxième rondelle de frottement, suffisamment résistant pour ne pas être déformée par la deuxième rondelle élastique.

La description qui va suivre illustre l'invention en regard des dessins annexés dans lesquels :
- la figure 1 est une vue partielle en élévation avec arrachement local de l'amortisseur de torsion selon l'invention et selon la flèche 1 de la figure 2 ;
- la figure 2 est une vue en coupe selon la ligne 2-2 de la figure 1 avec représentation partielle de l'embrayage ;
- la figure 3 est une vue à plus grande échelle de la partie médiane supérieure de la figure 2 ;
- la figure 4 est une vue partielle selon la flèche 4 de la figure 3 ;
- les figures 5 et 6 sont des diagrammes schématiques de l'amortisseur selon l'invention avec dans la figure 6 en ordonnée C le couple transmis par l'amortisseur de torsion et en D le débattement angulaire relatif entre l'élément d'entrée et l'élément de sortie de l'amortisseur ;
- la figure 7 est une demi-vue en coupe axiale d'un amortisseur pour une seconde variante de réalisation ;
- la figure 8 est une demi-vue partielle en coupe axiale d'un amortisseur pour un troisième exemple de réalisation ;
- les figures 9 à 12 sont des vues partielles en coupe axiale montrant différentes variantes de réalisation de l'entretoise de frottement que comporte l'amortisseur ;
- la figure 13 est une vue partielle en coupe axiale pour encore une autre variante de réalisation ;
- la figure 14 est une vue partielle avec arrachement local selon la flèche 14 de la figure 13 ;
- la figure 15 est un diagramme analogue à celui de la figure 5 pour cette variante de réalisation.

Dans les figures illustrées, l'amortisseur de torsion est une friction d'embrayage pour véhicule automobile à moteur à combustion interne générateur de vibrations.

L'amortisseur comporte un élément d'entrée 1, deux rondelles de guidage 2, 3 solidaires de l'élément d'entrée 1, un voile annulaire 4 encadré par les rondelles de guidage 2, 3, des premiers organes élastiques 5 d'une part, interposés circonférentiellement entre le voile 4 et les rondelles de guidage 2, 3 et d'autre part portés par les rondelles de guidage 2, 3 en étant montés avec jeu dans des premiers logements 25, 26, 125 du voile 4, des plaques de réaction 6, 7 disposées de part et d'autre du voile 4 en étant encadrées par les rondelles de guidage 2, 3, des seconds organes élastiques 8, 81, au moins en partie de plus faible raideur que les premiers organes élastiques 5, interposés circonférentiellement entre les plaques de réaction 6, 7 et le voile 4, des moyens d'entraînement 9 intervenant entre des plaques de réaction 6, 7 et au moins une partie des premiers organes élastiques 5, des moyens de frottement 10 à serrage élastique intervenant axialement entre les rondelles de guidage 2, 3 et les plaques de réaction 6, 7, un élément de sortie 11 sous forme d'un moyeu solidaire du voile 4 en étant entouré de manière rotative par les rondelles de guidage 2, 3 et les plaques de réaction 6, 7.

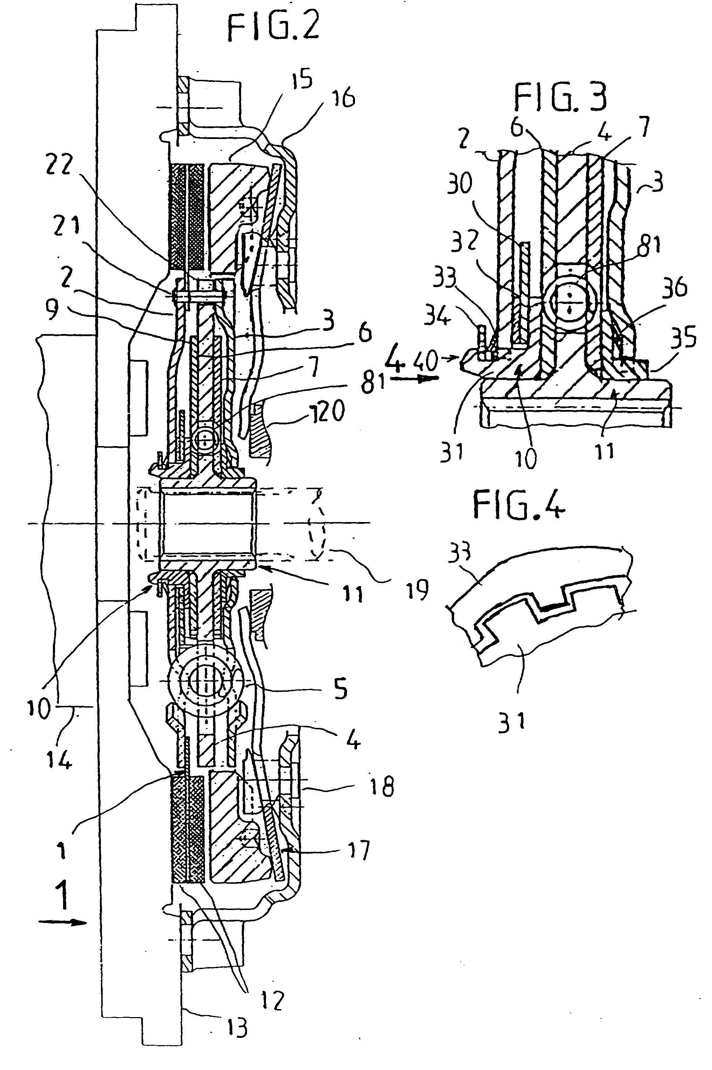

Ici (figure 2), l'élément d'entrée 1 consiste en un disque portant à fixation sur chacune de ses faces des garnitures de frottement 22, éventuellement fractionnées, propres à être serrées entre les plateaux de réaction 13 et de pression 14 que comporte l'embrayage à friction du véhicule automobile. Ce disque 1 est solidaire de la rondelle de guidage 2, de manière connue en soi, à l'aide de rivets spécifiques (non représentés), des entretoises 21 reliant entre elles lesdites rondelles de guidage 2, 3.

En variante les colonnettes 21, peuvent fixer le disque 1 sur la rondelle 2.

Ainsi les pièces 1, 2, 3 sont solidaires en rotation par frottement du vilebrequin 14 du moteur à combustion interne (l'arbre menant), l'embrayage étant normalement engagé avec serrage des garnitures 22 entre les plateaux 13, 15 sous la sollicitation d'un diaphragme 17 prenant appui sur un couvercle 16 pour solliciter le plateau 15 en direction du plateau 13.

Pour désengager l'embrayage il faut appuyer sur l'extrémité des doigts du diaphragme 17, montés ici de manière basculante sur le couvercle 16 par des colonnettes 18, à l'aide d'une butée de débrayage 120 agissant ici en poussée pour faire basculer le diaphragme et libérer le plateau de pression 15 (figure 2).

Pour mémoire on rappellera que le plateau 15 est solidaire en rotation du couvercle 16 en étant monté mobile axialement par rapport à celui-ci usuellement à l'aide de languettes tangentielles, l'ensemble des pièces 15, 16, 17, 18 formant un ensemble unitaire que l'on vient rapporter par vissage sur le plateau de réaction 13 grâce au couvercle 16 doté ici, à cet effet, d'un rebord radial.

Le moyeu 11, concentrique à l'axe de rotation de la friction d'embrayage, est cannelé intérieurement pour sa liaison en rotation à l'arbre d'entrée 19 de la boîte de vitesse.

Ainsi normalement, embrayage engagé, le couple est transmis du moteur à l'élément de sortie 11 et à la boîte de vitesses par deux dispositifs amortisseurs de torsion d'action étagée ; le premier dispositif comprenant les rondelles de guidage 2, 3, le voile 4 et les premiers organes élastiques 5, tandis que l'autre comprend les plaques de réaction 6, 7, le voile 4 et les seconds organes élastiques 8, 81.

Le premier dispositif est plus fort que le second dispositif et remplit la fonction principale d'amortissement en fonctionnement normal lorsque le véhicule roule, l'embrayage étant engagé (régime de charge). Ici les premiers organes élastiques 5 sont dimensionnés pour le régime de charge.

Ce premier dispositif se révèle insuffisant pour absorber efficacement les vibrations lorsque le couple transmis par la friction d'embrayage est très faible ou nul, par exemple, lorsque le véhicule automobile se trouve au point mort (régime de ralenti).

Ce rôle est effectué par le second dispositif, choisit plus faible, notamment par le choix des organes élastiques 8, 81 dimensionnés pour le régime de ralenti.

Ce second dispositif joue ainsi le rôle de préamortisseur.

Avec les amortisseurs de ce type de l'art antérieur faisant intervenir des dentures entre le voile et le moyeu, comme décrit dans les documents FR-A-2 386 729 et US-A-4,212,380, on a constaté sur certains véhicules des bruits se produisant notamment lors du réembrayage, d'inversions à faible vitesse, ainsi qu'en première vitesse à bas régime lorsque le véhicule roule.

Pour éviter cela, tout en ayant, notamment pour des raisons de confort, un grand débattement angulaire entre le voile et les rondelles de guidage, les seconds organes élastiques 8, 81 sont implantés radialement en dessous des premiers organes élastiques 5, et les moyens de frottement 10 à serrage élastique comportent au moins une première rondelle élastique à action axiale 36, interposée entre l'une des rondelles de guidage 2, 3 et l'une des plaques de réaction 6, 7, qui sollicite axialement les plaques de réaction 6, 7 en direction du voile 4 pour induire un frottement entre lesdites plaques 6, 7 et le voile 4, en sorte que les plaques de réaction 6, 7 sont distinctes l'une de l'autre.

Ainsi, contrairement aux dispositions décrites dans le document FR-A-1 525 291, aucun moyen de solidarisation entre les rondelles de réaction n'est nécessaire en sorte que la résistance du voile est accrue et la fabrication simplifiée.

On peut également élargir circonférentiellement les premiers logements 24, 25.

On appréciera que les moyens de frottement 10 permettent notamment de s'affranchir de tels moyens de solidarisation.

L'implantation des seconds organes élastiques 8, 81 en dessous des premiers organes 5 permet de ne pas affaiblir outre mesure le voile et d'accroître le débattement angulaire possible entre le disque 1 et le moyeu 11.

Grâce aux premiers organes élastiques, au début du débattement angulaire relatif entre l'élément d'entrée 1 et le moyeu 11, les rondelles de guidage entraînent les plaques de réaction 6, 7 avec compression des organes 8, 81 entre le voile 4 et les plaques 6, 7, ainsi qu'apparition de frottements de manière décrite ci-après.

Plus précisément, les organes élastiques 5 consistent ici en des ressorts à boudins montés sans jeu dans des ouvertures, ici fenêtres 24 pratiquées dans les rondelles de guidage 2, 3, et avec jeu dans des fenêtres 25, 26 ménagées en vis-à-vis dans le voile 4 et constituant les premiers logements.

Ici quatre ressorts 5 sont prévus en étant répartis régulièrement circonférentiellement sur une même circonférence radialement au-dessus des organes élastiques 8, 81 également sous forme de ressorts à boudins.

Bien entendu une partie au moins des organes élastiques 5, 8, 81 peut consister en des blocs en matière élastique telle que de l'élastomère.

Les ressorts 5 sont montés par paire de ressorts l'un des ressorts entourant l'autre (figure 2). Les ressorts 8, 81 sont également répartis régulièrement circonférentiellement en étant au nombre de quatre, deux des ressorts 8 étant montés sans jeu dans des fenêtres 82, 83, ménagées en vis-à-vis dans le voile 4 et dans les plaques de réaction 6, 7 tandis que deux autres ressorts 81 sont montés sans jeu dans des fenêtres 84, pratiquées dans les plaques de réaction et avec jeu dans des fenêtres 85 ménagées dans le voile 4.

Bien entendu, on peut inverser les structures, les ressorts 81 étant montés sans jeu dans les fenêtres 85 et avec jeu dans les fenêtres 84 formant des seconds logements pratiques dans le voile 4.

Bien entendu les ressorts 8, 81 peuvent être montées dans des poches formées dans les plaques 6, 7 et tel que visible à la figure 36 du document US-A-5,209,334. De même, les ouvertures 24 peuvent être formées à la faveur de zones embouties formant des poches pour les ressorts 5.

Les fenêtres 25, 26 peuvent être ouvertes à leur périphérie externe et consister en des échancrures.

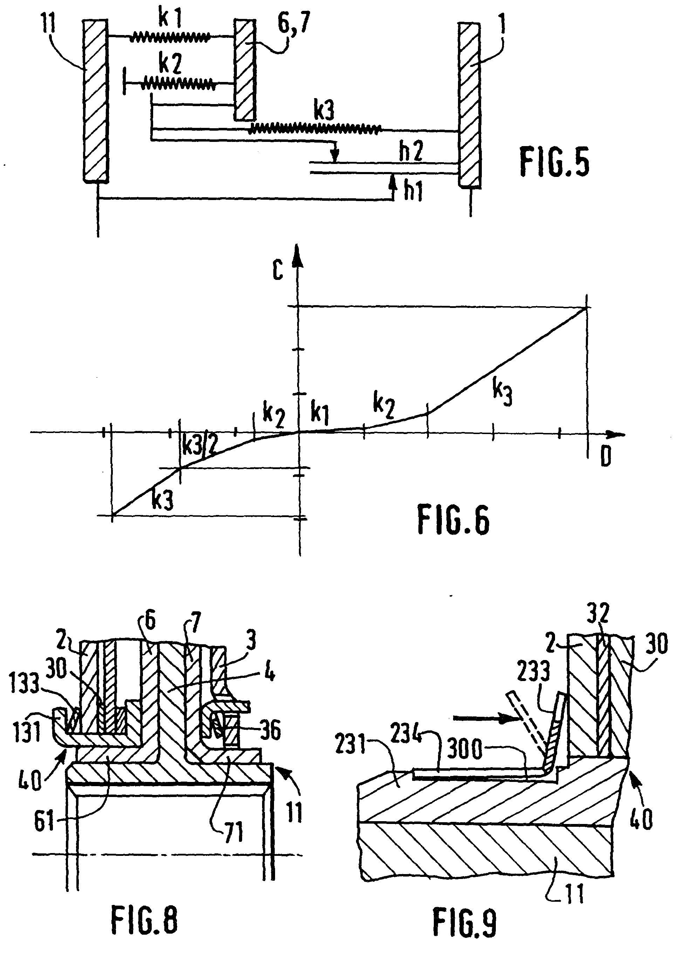

On appréciera que ceci est rendu possible grâce à l'implantation des ressorts 8, 81 par rapport aux ressorts 5. En pratique, les ressorts 8 sont de plus faible raideur que les ressorts 81 eux-mêmes de plus faible raideur que les ressorts 5. On obtient donc un préamortisseur à trois pentes (figure 6) au bénéfice du confort de l'usager et d'une bonne filtration des vibrations.

Les moyens d'entraînement 9 consistent ici en des pattes radiales issues de la périphérie externe des plaques 6, 7. Chaque plaque comporte au moins deux pattes radiales venant en prise avec les extrémités circonférentielles de l'un des ressorts 5. Ainsi, il y a création d'une fourche définie par les deux pattes délimitant entre elles une échancrure.

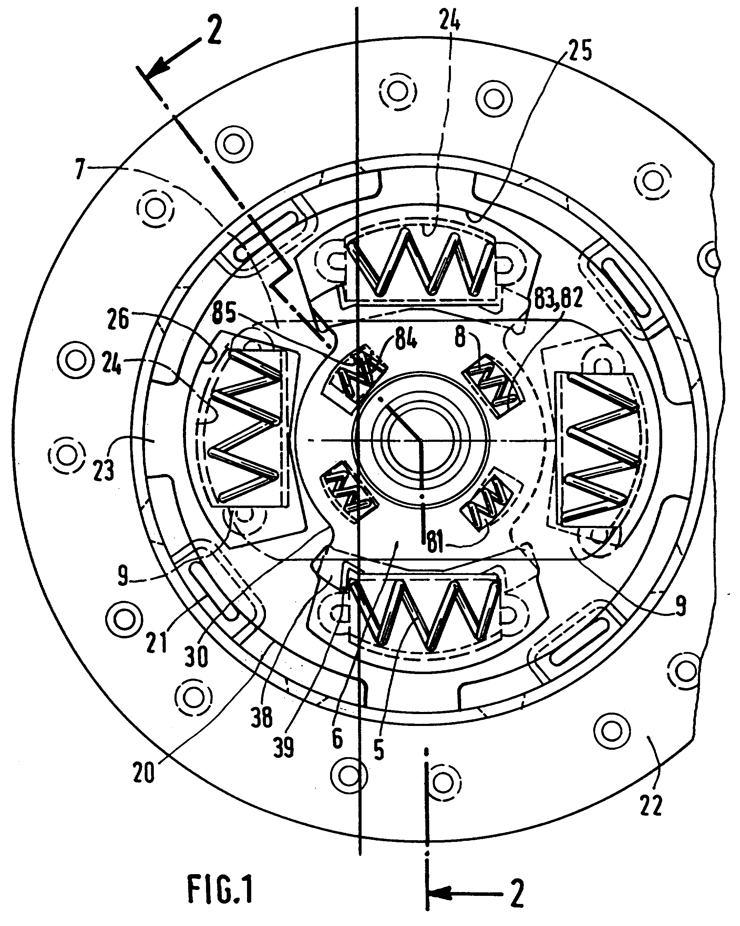

Comme mieux visible à la figure 1, chaque plaque 6, 7 vient en prise avec deux des ressorts diamètralement opposés 5 grâce à deux fourches à pattes 9.

Bien entendu, les moyens d'entraînement peuvent consister en des fenêtres pratiquées dans les plaques 6, 7, les pattes étant alors reliées circonférentiellement à leur périphérie externe..

Le frottement entre les plaques 6 et 7 et le voile 4 peut se faire avec intervention de rondelles de frottement interposées entre le voile et les plaques 6, 7.

Par exemple les plaque 6, 7 peuvent être métalliques et porter à fixation, sur leur face dirigée vers le voile 4, une garniture en matériau de faible coefficient de frottement. En variante, ladite garniture peut être fixée sur le voile 4 ou être montée libre en le voile 4 et la plaque 6, 7 concernée.

Bien entendu, comme décrit dans les figures 8 et 9 du document US-A-5,209,334, les plaques 6, 7 peuvent être en deux parties en étant à leur périphérie externe métallique pour venir en prise avec les ressorts 5, et à leur périphérie interne en matière plastique avec une section en forme de "L" avec formation d'un des paliers entourant le moyeu 11..

Ici, les plaques de réaction 6, 7 sont entièrement en matière plastique avantageusement renforcée par des fibres, lesdites plaques ayant un faible coefficient de frottement et étant en contact avec le voile 4. Cette disposition permet de réduire les bruits et le nombre de pièces et l'encombrement axial entre les rondelles 2, 3. La réalisation en matière plastique permet également d'épaissir les plaques 6, 7 au niveau des pattes radiales 9 en sorte que l'on obtient une meilleure assise pour les ressorts 5. Ceci est rendu aisé car les plaques 6, 7 sont facilement réalisables par moulage. Cela est rendu possible grâce au dispositions selon l'invention.

Ainsi qu'on l'aura compris ces plaques constituent pour les ressorts 8, 81 des rondelles de guidage.

Chaque plaque 6, 7, est, selon l'invention avantageusement propre à venir en contact avec une rondelle de frottement calée en rotation sur la rondelle de guidage concernée.

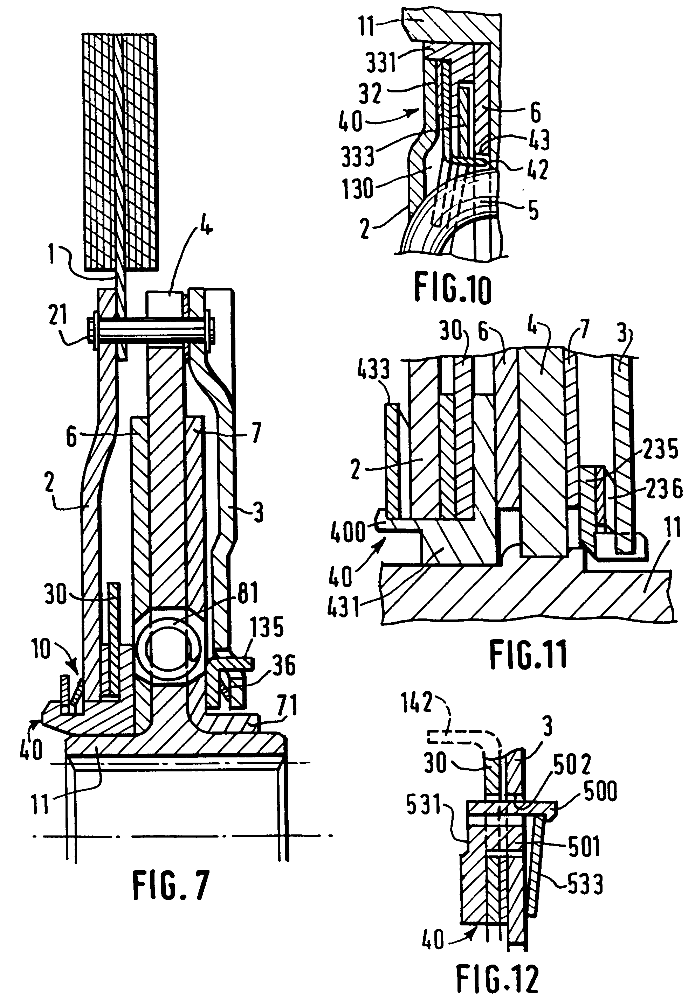

Plus précisément, les moyens de frottement 10 à action axiale comportent au moins une première rondelle élastique à action axiale 36 (figures 3,7,8), 236 (figure 11) et une première rondelle de frottement 35 (figure 3), 135 (figure 7), 235 (figure 11). La première rondelle de frottement est soumise à l'action de la première rondelle élastique. Ladite première rondelle de frottement et ladite première rondelle élastique étant implantées axialement entre l'une des rondelles de guidage 3, dite première rondelle de guidage et l'une 7 des plaques de réaction.

Ladite première rondelle élastique est interposée axialement entre la première rondelle de guidage 3 et ladite première rondelle de frottement.

Entre l'autre rondelle de guidage 2, dite deuxième rondelle de guidage et l'autre plaque 6 est implantée axialement une entretoise de frottement 40 calée en rotation sur la deuxième rondelle de guidage et formée d'un empilage de rondelles de frottement, dont l'une au moins 30 (figures 3,7,8,9,11,12), 130 (figure 10), dite ici par commodité troisième rondelle de frottement, est propre à venir en prise avec l'un au moins des ressorts 5 et à être actionnée par le voile 4. L'entretoise 40 comporte selon l'invention une seconde rondelle de frottement calée en rotation et axialement sur la deuxième rondelle de guidage 2. La troisième rondelle de frottement 30, est donc propre à venir en prise, de manière différée avec le voile 4 pour induire un frottement au contact de l'un au moins des éléments deuxième rondelle de guidage - deuxième rondelle de frottement. La troisième rondelle de frottement 30 est soumise à l'action d'au moins une seconde rondelle élastique à action axiale agissant axialement entre la seconde rondelle de frottement et la seconde rondelle de guidage.

On obtient ainsi des frottements indépendants dont l'un, taré par la première rondelle élastique 36, permet de ne pas oblitérer l'action des ressorts 8, 81 et dont l'autre, fonction de la troisième rondelle de frottement et de la deuxième rondelle élastique, est adapté aux ressorts 5 et au régime de charge.

A la figure 1 la troisième rondelle de frottement 30 et métallique et comporte à sa périphérie externe deux pattes radiales 38 par ressorts 5 avec des plis 39, d'orientation axiale, perpendiculaires au plan de ladite rondelle, pour venir en prise avec les extrémités circonférentielles d'un ressort 5.

Les plis 39 sont donc en forme d'équerre et sont propres à interférer avec les bords latéraux des fenêtres 25 du voile 4.

Il est défini ainsi au moins une fourche à deux pattes 38 avec des plis 39 propres à être actionnés de manière différée par le voile 4.

En pratique, à la figure 1, la rondelle 30 est en prise avec deux ressorts 5 diamètralement opposés et comporte donc deux fourches pour des raisons d'équilibrage.

En position de repos de l'amortisseur les pattes 38 sont globalement perpendiculaires aux pattes 9 des plaques de réaction 6, 7. Deux des ressorts 5 servent donc à l'entraînement de la rondelle 30 tandis que deux autres servent à l'entraînement des plaques 6, 7. C'est la raison pour laquelle les fenêtres 25 du voile 4 sont différentes des fenêtres 26 du voile 4, les fenêtres 25 étant conformées pour recevoir les plis 39 des pattes 38. La rondelle 30 en position de repos de l'ensemble est dirigée perpendiculairement par rapport aux plaques 6, 7.

Dans cette figure 1 tous les ressorts 5 ont la même raideur.

Suivant une caractéristique de l'invention l'entretoise de frottement 40 forme un sous-ensemble unitaire avec la rondelle de guidage 2, 3 à laquelle elle est associée.

Dans les figures 1 à 4, l'entretoise de frottement 40 comporte la seconde rondelle de frottement 31, ici en matière plastique, et qui a une section en forme de "L".

Cette seconde rondelle 31 forme donc un palier annulaire 31 avec une partie d'orientation axiale, formant une douille, interposée radialement entre la périphérie externe du moyeu 11 et la périphérie interne de la rondelle de guidage 2. La partie transversale du palier 31 est interposée axialement entre la plaque de réaction 6 et ici, la troisième rondelle de frottement 30.

Une rondelle de frottement 32 est interposée axialement entre la rondelle 30 et la rondelle de guidage 2. Cette rondelle 32 peut être montée libre entre les rondelles 30 et 2 ou être solidaire par exemple par collage de la rondelle 30 ou 2. Ici cette rondelle 32 est solidaire de la rondelle 30.

Bien entendu, dans certains cas on peut supprimer la rondelle 32 et avoir un contact direct entre la rondelle 30 et la rondelle de guidage 2 suivant la nature du frottement recherché. De même, une autre rondelle de frottement peut intervenir entre la rondelle 30 et la seconde rondelle de frottement 31. Dans tous les cas la troisième rondelle de frottement est admise à frotter, directement ou indirectement contre l'un des éléments deuxième rondelle de guidage 2 - deuxième rondelle de frottement 31.

Les rondelles de guidage 2 et 3 présentent chacune à leur périphérie interne des encoches tandis que le palier 31 possède à sa périphérie externe des bossages propres à coopérer de manière complémentaire avec lesdites encoches.

Le palier 31 est ainsi lié en rotation, par coopération de formes, avec la seconde rondelle de guidage 2. La première rondelle élastique à action axiale 36 consiste ici en une rondelle Belleville, en variante en une rondelle ondulée, tandis que la première rondelle de frottement 35 consiste en un palier annulaire à section en forme de "L" interposé radialement entre la périphérie interne de la première rondelle 3 et la périphérie externe du moyeu 11. Ce palier 35 est lié à rotation à la rondelle 3, par coopération de formes, grâce à des bossages que possède ledit palier 35 pour coopérer de manière complémentaire avec les encoches de la rondelle 3.

Le palier 35 forme donc une rondelle d'application interposée entre la rondelle 3 et la plaque 7. Le ressort 36 s'appuie sur la rondelle 3 pour solliciter le palier 35 au contact de la plaque 7 afin de serrer l'entretoise 40 entre la plaque 6 et la rondelle 2.

Chaque plaque 6, 7 est donc, selon l'invention, au contact d'une rondelle de frottement 31, 35 calée en rotation sur la rondelle de guidage 2, 3 concernée.

L'entretoise 40 est également associée à au moins une seconde rondelle élastiques spécifiques à action axiale 33. Cette seconde rondelle consiste (figures 1 à 4) en une rondelle Belleville, en variante en une rondelle ondulée, prenant appui sur la seconde rondelle de guidage 2 à l'extérieur du volume délimité par les rondelles 2, 3.

Bien entendu, on peut prévoir plusieurs rondelles élastiques 33 ou 36 montées en série. La rondelle 33, accessible de l'extérieur, possède pour son blocage en rotation par rapport au palier 31 (par rapport à la douille de celui-ci) à sa périphérie interne des pattes engagées dans des encoches complémentaires (figure 4) formées à la périphérie externe de la douille du palier 31. Un circlips d'arrêt 34 est monté sur ladite partie axiale du palier pour immobiliser axialement la rondelle 33 et servir d'épaulement.

Ainsi, la (ou les) rondelle(s) 33 en prenant appui sur le circlips 34 sollicite la partie transversale du palier 31 axialement en direction de la rondelle 2 pour venir serrer les rondelles 30 et 32. La rondelle 33 est donc portée par le palier 31 et il est formé un sous-ensemble unitaire entretoise 40 - rondelle 2, grâce à la rondelle 33 prenant appui sur la rondelle 2 et sur un épaulement 34 du palier 31. L'entretoise 40, et donc la seconde rondelle de frottement 31, est ainsi liés axialement à la rondelle 2, avec possibilité de rattrapage des jeux dus aux usures des différentes rondelles puisque le palier 31 à la possibilité de se déplacer axialement par rapport à la rondelle de guidage 2.

Cette rondelle élastique 33 a une charge supérieure à celle de la rondelle 36 de manière connue en soi. En effet la charge de la rondelle 36 est choisie de telle manière que le frottement engendré entre le voile 4 et les plaques 6, 7 n'oblitère l'action des ressorts 8 de plus faible raideur. Les plaques 6, 7 en matière plastique favorisent cela en minimisant les frottements.

On notera que les rondelles 36 et 33 sont implantées globalement sur une même circonférence, au voisinage du moyeu 11, et que le dispositif de frottement 10 est peu encombrant radialement.

En outre, la rondelle 33 n'a pas d'action de serrage sur les plaques 6 et 7 puisque la seconde rondelle de frottement 31 est calée axialement sur la seconde rondelle de guidage 32 en étant liée axialement à celle-ci par l'intermédiaire notamment de la seconde rondelle élastique 33.

Ainsi, l'amortisseur de torsion fonctionne de la manière suivante :
- dans une première étape (phase), les garnitures 12 étant serrées entre les plateaux 13 et 15, le couple est transmis du vilebrequin 14 à l'arbre d'entrée 19, grâce aux rondelles de guidage 2, 3, entraînant les deux ressorts 5 raides concernés de la figure 1, lesquels entraînent, sans pour ainsi dire se comprimer, les plaques 6, 7 qui viennent comprimer dans cette première étape les ressorts 8,81 de faible raideur.

Le voile 4 et le moyeu 11, d'un seul tenant avec le voile 4 (figures 1 à 4) sont donc entraînés par ces ressorts 8,81. Durant cette première étape un frottement se produit entre la plaque 6 et le voile 4, ainsi qu'entre la plaque 7 et le voile 4, aucun mouvement relatif ne se produisant entre le palier 35 et la plaque 7 ainsi qu'entre la plaque 6 et la partie transversale du palier 31.

Bien entendu, un frottement a lieu en permanence entre les paliers 31, 35 (l'alésage interne de ceux-ci) et la périphérie externe du voile 11.

On notera que la rondelle 30 est également soumise en permanence à l'action de la rondelle élastique 36.

Cette première phase se poursuit jusqu'à ce que les plaques 6, 7 par leurs fenêtres 85 viennent au contact des ressorts 81, qui sont alors comprimés dans une deuxième phase, les moyens de frottement 10 intervenant de la même manière que précédemment.

Dans une troisième phase ou étape, le jeu angulaire entre les fenêtres 25, 26 est rattrapé et les ressorts 5 sont admis à être comprimés. Durant cette troisième phase, un mouvement relatif se produit entre les plaques 6, 7 et respectivement les parties transversales des paliers 31, 35 avec augmentation du frottement.

En effet, le voile 4 venant par ses fenêtres 25, 26 comprimer les ressorts 5, les plaques 6, 7 se désolidarisent des rondelles de guidage 2, 3 et vont suivre le mouvement du voile 4 grâce aux ressorts 81 qui se détendent tout comme les ressorts 8. Ainsi, les plaques 6, 7 sont des plaques suiveuses.

Bien entendu, selon une caractéristique, on choisit le tarage du ressort 36 et les tarages des ressorts 8, 81 en sorte que ce mouvement se produise, les ressorts 8, 81 étant donc choisis de façon qu'ils permettent un entraînement circonférentiel des plaques 6 et 7 malgré l'action de serrage axial exercé par le ressort 36, qui permet un pincement des plaques 6 et 7 entre les paliers 31, 35.

Ainsi, lorsque le voile 4 vient en prise avec les ressorts 5, on a d'abord une détente des ressorts 8, 81 jusqu'à un équilibre entre le couple de frottement, dû aux moyens de frottement 10, notamment à la rondelle 36, agissant sur le voile et le couple délivré par les ressorts 8, 81 comprimés. Ensuite les plaque 6, 7 suivent le mouvement du voile 4.

Ainsi, grâce à cette disposition les seconds organes élastiques 8, 81 de plus faible raideur sont ménagés et ne sont pas sollicités outre mesure contrairement aux dispositions des figures 1 à 7 du document US-A-5,209,334.

Ainsi qu'on l'aura compris et qu'il ressort à l'évidence de la description on peut faire intervenir la rondelle de frottement 30 de manière voulue, et avec un serrage déterminé par la seconde (ou les) rondelle(s) 33 selon les applications.

Ainsi, dans les figures 1 à 4, on fait intervenir ce frottement après avoir commencé à comprimer les ressorts 81. Ceci est rendu possible du fait que la rondelle 30 est montée sur deux ressorts 5 distincts des ressorts 5 associés aux plaques 6 et 7.

Ainsi après rattrapage du jeu angulaire entre le voile 4 (les fenêtres 25 de celui-ci) et les plis 39 des pattes 38, la rondelle 30 est solidaire en rotation du voile 4 et un mouvement relatif se produit entre d'une part la rondelle 30 et le palier 31, et d'autre part la rondelle 32 et la rondelle de guidage 2.

La rondelle 30 est soumise, dans cette phase, à l'action des ressorts 36 et 33.

Ainsi, on peut avoir une bonne adaptation pour la filtration des vibrations et un bon confort pour l'usager, les moyens élastiques 33 étant tarés en conséquence. Pour plus de précisions on se reportera aux diagrammes des figures 5 et 6 dans lesquelles k1, k2, k3 sont respectivement les raideurs des ressorts 8, 81, 85, h1 est le frottement se produisant via les paliers 31, 35 entre les rondelles de guidage 2, 3 et le moyeu 4, tandis que h2 est le frottement se produisant au sein de l'entretoise de frottement 40 appartenant à une cassette d'hystérésis 40-2 solidaire de la seconde rondelle de guidage 2.

Bien entendu, un jeu circonférentiel peut exister entre les plis 39 et les ressorts 5. Ainsi on crée le frottement h2 avant d'attaquer les ressorts 5. La rondelle 30 agit alors à la manière d'un tiroir.

On appréciera que les colonnettes 21 sont des entretoises plates c'est-à-dire peu épaisses radialement. Ces entretoises (figure 1) sont implantées radialement au-delà des ressorts à la périphérie externe 20 du voile 4. Ces entretoises 21, implantées radialement au-dessus de ladite périphérie 20, sont propres à coopérer avec des pattes radiales 23 d'un seul tenant avec le voile 4. Ces pattes 23 sont saillantes radialement vers l'extérieur par rapport à la périphérie 20. Leur extension radiale est fonction de l'épaisseur des entretoises 21. Ici quatre pattes 23 et quatre entretoises 21 sont prévues de manière symétrique.

Grâce à cette disposition on obtient un voile résistant et un grand débattement angulaire entre la partie d'entrée 1 et le voile 4. Le jeu angulaire entre une entretoise 21 et deux pattes 23 consécutives est fonction des applications.

Tout ceci permet d'augmenter le débattement angulaire entre les parties 1, 11 d'autant plus que les pattes radiales 23 sont implantées au droit des fenêtres 24, 25 ce qui accroît la résistance du voile 4.

Bien entendu la présente invention n'est pas limitée à l'exemple de réalisation décrit.

En particulier, alors que dans les figures 1 à 4 les plaques 6, 7 étaient identiques entre elles, à la figure 7, la plaque 7 est différenciée et présente à sa périphérie interne une douille 71 pour contact de frottement avec la périphérie externe du moyeu 11.

La première rondelle de frottement et d'application 135 est modifiée et consiste ici en une rondelle avec des pattes axiales pénétrant dans des ouvertures complémentaires pratiquées dans la rondelle de guidage 3 pour liaison en rotation de la rondelle 135 avec la rondelle 3.

Ainsi qu'on l'aura compris la douille 71 joue le rôle du palier 35 dans la première phase de fonctionnement, un frottement se produisant alors entre le moyeu 11 et cette douille 71, avantageusement en matière plastique à faible coefficient de frottement comme la plaque 7 d'un seul tenant avec sa douille 71. Le palier 31 frotte donc seul en permanence au contact du moyeu 11.

A la figure 8, la plaque 6 en matière plastique présente également à sa périphérie interne une douille 61 en contact avec la périphérie externe du voile 11, la douille 61 étant plus longue que la douille 71.

Le palier 131, formant la seconde rondelle de frottement, est interposé entre la périphérie externe de la douille 61 et la périphérie interne de la rondelle de guidage.

Ici, ce palier 131 est métallique et comporte une extrémité rabattue radialement en direction opposée à l'axe de l'ensemble après montage de la rondelle Belleville 133. Il est formé ainsi un épaulement, pour la rondelle 133, sous forme d'un coude de pliage en sorte que le circlips 34 de la figure 3 n'est plus nécessaire. La rondelle 30 est revêtue à fixation sur chacune de ses faces d'une rondelle de frottement. Il est formé également un ensemble unitaire avec la seconde rondelle de guidage 2, comportant la rondelle 133, le palier 31 et la troisième rondelle de frottement 30.

Ainsi, dans la première étape, la douille 61 est solidaire du palier 131 et un frottement se produit entre l'alésage interne de la douille 61 et le moyeu 11, tandis que dans la troisième étape, la plaque 6 suivant le mouvement du voile 4, un frottement se produit entre la périphérie externe de la douille 61 et l'alésage interne du palier 131 lié en rotation à la rondelle de guidage 2. Cela est caractéristique de l'invention.

Bien entendu, la douille 61 peut être à raideur variable avec une partie interne plus souple pour minimiser les frottements entre le moyeu 11 et la douille, le frottement entre la douille 61 et le palier 131 étant plus important.

A la figure 9, le circlips de la figure 34 est également supprimé. Pour cela le palier 231 en matière plastique présente à l'extérieur du volume délimité par les rondelles 2, 3 une gorge 300 dans laquelle est montée une rondelle élastique de type Belleville 233 avec à sa périphérie interne des pattes 234 montées dans ladite gorge 300, dont l'un des flancs forme un épaulement pour l'extrémité libre des pattes 234.

Le montage de la rondelle 233 se fait par enfilage axial de la rondelle sur la partie axiale du palier 231 jusqu'à ce que les pattes 234 se positionnent dans la gorge 300.

Selon une caractéristique la rondelle Belleville est apte à prendre par retournement deux positions en sorte qu'à l'aide d'un outil on exerce une action sur la rondelle 233, initialement dans la position représentée à la figure 9, pour la retourner afin d'assembler l'entretoise 40 avec la rondelle de guidage 2.

A la figure 10 le serrage de la troisième rondelle de frottement 130 à pattes radiales coopérant avec l'un au moins des ressorts 5 est assuré grâce à des pattes élastiques 333 issues de la périphérie interne du disque 1 et pénétrant entre deux ressorts 5. Ces pattes sont engagées de manière complémentaire dans des échancrures prévues à cet effet dans le palier 331 en matière plastique et sollicitent celui-ci en direction de la rondelle de guidage 2.

Les pattes 333 par coopération avec lesdites échancrures assurent une liaison en rotation du palier 331 avec le disque 1, tandis que la rondelle 130, dépourvue des plis 39 de la figure 1, présente des pattes d'orientation axiale 42 pénétrant à jeu dans une échancrure 43 pratiquée dans la partie basse des fenêtres du voile.

Grâce aux pattes 142, la rondelle 130 est entraînée (actionnée) par le voile 4.

On notera que les pattes 333 prennent appui d'une part, sur la rondelle de guidage 2 du fait que le disque 1 est solidaire de ladite rondelle et d'autre part, sur le palier 331 afin de solliciter ledit palier et l'entretoise de frottement en direction de la rondelle de guidage 2 pour liaison axiale avec celle-ci.

Comme visible à la figure 10 un jeu axial existe entre les pattes 333 et la plaque 6 concernée. On obtient un serrage axial indépendant de la rondelle 130 en ayant la formation d'un ensemble unitaire (cassette d'hystérésis) entretoise de frottement 40 - rondelle de guidage 2 tout en n'ayant aucun élément élastique saillant, les pattes 333 étant destinées à être implantées dans le volume délimité par les rondelles de guidage.

A la figure 11, la première rondelle de frottement 236 est une rondelle ondulée et il en est de même pour la seconde rondelle élastique 433 pour le serrage spécifique de la rondelle 30.

On notera que le voile 4, dans cette figure, est solidarisé par sertissage au moyeu 11, alors que dans les figures précédentes il était d'un seul tenant avec le moyeu 11.

La première rondelle de frottement 235 consiste en un palier en matière plastique de forme semblable à celle de la figure 3, mais la rondelle de guidage 3 comporte à sa périphérie interne des languettes engrenant avec des encoches complémentaires formées dans la partie axiale du palier 235 pour liaison en rotation desdites pièces 3, 235.

Le palier 431, formant la seconde rondelle de frottement, étant en matière plastique on tire parti de sa configuration pour former dans celui-ci des pattes élastiquement déformables faisant saillie à l'extérieur du volume délimité par les rondelles 2, 3. Le montage de la rondelle élastique 433 se fait donc par encliquetage les pattes 400 étant pourvues de crochets pour retenir ladite rondelle 433.

Le palier 235 ne participe donc pas au frottement lors de la première étape.

A la figure 12 on a inversé les positions relatives de l'entretoise de frottement 40, de la seconde rondelle élastique et de la seconde rondelle de frottement, l'entretoise 40 étant associée à la rondelle 3 formant alors la seconde rondelle de guidage et la première rondelle de frottement, ici le palier 35 de la figure 3, étant associée à la rondelle 2 formant la première rondelle de guidage et intervenant avec un frottement permanent au niveau du moyeu.

Ainsi, la rondelle de frottement 531 ne forme pas un palier mais est dotée de pattes élastiquement déformables 500 traversant avec jeu l'ouverture 502 prévue dans la rondelle de guidage 3. La rondelle 531 présente également des protubérances axiales 501 engagées de manière complémentaire dans les ouvertures 502.

Il y a donc blocage en rotation, par coopération de formes, de la seconde rondelle 531 en matière plastique par rapport à la seconde rondelle de guidage 3.

Avantageusement, l'ouverture 502 de la rondelle 3 a une forme en "T".

La seconde rondelle élastique 533 s'appuie à sa périphérie externe sur des épaulements des pattes 500 formés à la faveur de crochets que présentent lesdites pattes 500.

A sa périphérie interne la rondelle Belleville 533 s'appuie sur la rondelle de guidage 3. Cette disposition permet un bon basculement du diaphragme 17, l'inclinaison de ladite rondelle 533 étant dans le même sens que celui du diaphragme 17.

Au lieu d'entretoises plates on peut utiliser des colonnettes 121 reliant entre elles les deux rondelles de guidage 2, 3, lesdites colonnettes servant également à la fixation du disque 1 en étant implantées radialement au-delà du voile 4.

Aucune interférence n'a lieu entre le voile 4 et les entretoises 31, la limitation du débattement angulaire entre le disque 1 et le moyeu 11 étant réalisée par venue à spires jointives des ressorts 50 appartenant aux premiers organes élastiques.

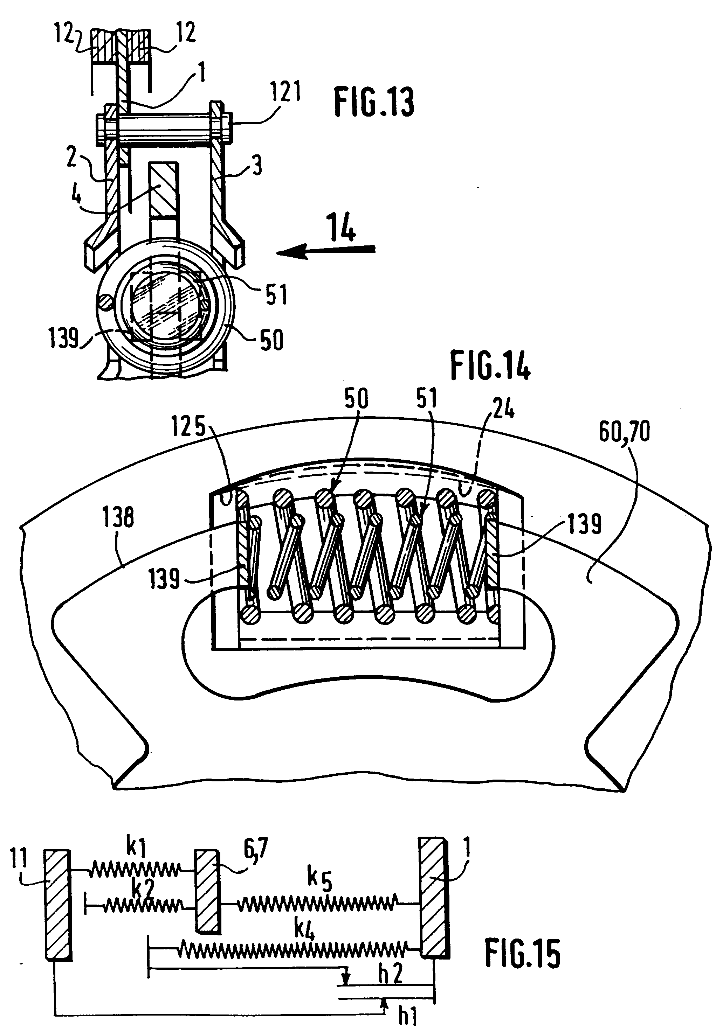

Plus précisément, dans cette réalisation le ressort 50 entoure un ressort 51, lesdits ressorts 50, 51 étant montés par paires dans des fenêtres 24 des rondelles de guidage 2, 3, sans jeu dans celles-ci et avec jeu dans les fenêtres 125 du voile. Dans ce cas une plaque supplémentaire 60, 70 est interposée axialement entre chaque plaque 6, 7 et le voile 4. Les plaques 60, 70 présentent des fenêtres pour leur montage sans jeu sur les ressorts 81 et à leur périphérie externe, de manière saillante, des pattes 138 avec des portions d'orientation circonférentielle à l'extrémité desquelles est réalisé un retour 139 d'orientation axiale (c'est-à-dire perpendiculaire au plan de la plaque 60, 70 concernée) pour appui sur l'extrémité circonférentielle concernée du ressort 51 (figure 14).

Les ressorts 51 sont précontraints entre les deux retours 139 définissant avec les pattes 138 une fourche.

Comme à la figure 1, les plaques 60, 70 sont dotées de fenêtres pour montage ici avec jeu sur les ressorts 8 afin que ceux-ci puissent agir librement dans la première étape.

Avantageusement la raideur des ressorts 51, appartenant aux premiers organes élastiques, est choisie identique à celle des ressorts 81. Ainsi, après un débattement angulaire déterminé les ressorts 51 et 81 interviennent en série ce qui permet d'augmenter le débattement angulaire relatif entre le disque 1 et le moyeu 11.

Bien entendu, la raideur des ressorts 51 peut être légèrement différente de celle des ressorts 81. D'une manière générale ces ressorts ont des raideurs voisines pour travailler efficacement en série.

Pour plus de précisions on se reportera à la figure 15, dans laquelle k1 représente, comme à la figure 5, la raideur des ressorts 8, k2 la raideur des ressorts 81, k5 la raideur des ressorts 51 et k4 la raideur des ressorts 50. Tout ceci permet d'augmenter le débattement angulaire entre le disque 1 et le moyeu 11.

Dans ce cas les moyens de frottement 10 sollicitent les plaques 6, 7 axialement en direction du voile 4, pour induire un frottement par l'intermédiaire des plaques 60, 70.

Le disque 1 peut être fixé directement sur le volant 12 aucun plateau de pression n'étant dans ce cas prévu, le moyeu 11 entraînant par exemple l'arbre d'entrée d'un variateur de vitesses à courroie et poulie variables.

Dans certains cas la rondelle de guidage 2 peut être prolongée radialement et être fixée directement au volant 12 de manière décrite ci-dessus.

Cette rondelle de guidage 2, constitue alors l'élément d'entrée de l'amortisseur.

Les logements pratiqués dans les rondelles de guidage 2, 3 peuvent être formés par des emboutis, les logements des ressorts 5 peuvent être ouverts à la périphérie externe du voile cela dépendant du couple à transmettre.

Dans ce cas, les moyens d'entretoise solidarisant les rondelles 2, 3 entre elles peuvent consister en un anneau, fixé par rivetage sur les rondelles 2, 3 et présentant des pattes radiales pénétrant dans les logements ouverts du voile, lesdites pattes étant implantées radialement au-delà des ressorts 5 et étant adaptées à coopérer avec les bords latéraux desdits logements pour limiter le débattement angulaire entre le voile 4 et les rondelles 2, 3.

La rondelle 30 peut présenter (figure 12 en pointillés) à sa périphérie externe des pattes 142 pour engrènement à jeu avec le bord inférieur des fenêtres 25.

La rondelle 30 est dans ce cas entraînée à jeu par le voile 4 sans être montée sur les ressorts 5 et sans interférence avec ceux-ci.

Bien entendu, dans les figures 8 et 11 on peut monter la seconde rondelle élastique 133, 433 entre la seconde rondelle de guidage 2 et la seconde rondelle de frottement 131, 431. Pour cela il suffit de décaler axialement, en direction opposé au voile 4, la périphérie interne de la rondelle de guidage 2 et l'épaulement radial en forme de coude de pliage de palier 131, ou les pattes 400 à crochet venant alors en prise avec la rondelle de guidage 2 pour caler axialement le palier 131, 431 dans un sens.

On notera, vu la charge des rondelle 133, 433 que le palier 131, 431 ne bouchera pas axialement dans l'autre sens axial.

Dans tous les cas l'entretoise de frottement comporte donc la seconde rondelle élastique. En variante, la seconde rondelle de frottement peut être liée directement à la rondelle de guidage, par exemple par sertissage ou rivetage, cette rondelle peut présenter localement des pions épaulés, pénétrant dans une ouverture associée prévue dans la rondelle de guidage, et fixés à celle-ci par refoulement de matière à la rondelle de guidage. Ainsi cette seconde rondelle de frottement est liée directement à la rondelle de guidage tant axialement qu'en rotation. On peut alors implanter la seconde rondelle élastique entre la seconde rondelle de guidage et la seconde rondelle de frottement, qui ne se déplacera pas axialement par rapport à la seconde rondelle de guidage.

Bien entendu, la seconde rondelle élastique peut prendre appui sur la seconde rondelle de frottement pour solliciter la troisième rondelle de frottement au contact de la seconde rondelle de guidage. Avantageusement on intercale une rondelle d'application, liée en rotation à la seconde rondelle de frottement entre ladite seconde rondelle de frottement et la troisième rondelle de frottement.

Dans tous les cas, il est possible de former un ensemble unitaire avec la seconde rondelle de guidage, une entretoise de frottement étant alors interposée entre la plaque de retenue concernée et la seconde rondelle de guidage.

La seconde rondelle de frottement est dans tous les cas décalée axialement par rapport à la seconde rondelle de guidage et définie avec celle-ci un logement dans lequel est monté la troisième rondelle de frottement, qui en variante peut être dédoublée en deux rondelles, chacune présentant alors qu'une fourche 38, 39. Dans tous les cas le système de frottement associé aux premiers ressorts 5 ne s'étend que d'un côté du voile, abstraction faite des équerres 39. Bien entendu, l'épaisseur du voile 4 et des plaques de réaction 6,7 est telle que les seconds organes élastiques 8,81 n'interfèrent pas avec la première et la seconde rondelle de frottement. De préférence chaque plaque de réaction forme un palier monté sur le moyeu 11.

## Revendications

1. Amortisseur de torsion, notamment disque de friction d'embrayage pour véhicule automobile, comportant un élément d'entrée (1), deux rondelles de guidage (2,3) solidaires de l'élément d'entrée (1), un voile annulaire (4) encadré par les rondelles de guidage (2,3), des premiers organes élastiques (5,50) d'une part, interposés circonférentiellement entre le voile (4) et les rondelles de guidage (2,3) et d'autre part portés par les rondelles de guidage (2,3) en étant montés avec jeu dans des premiers logements (25,26,125) du voile (4), des plaques de réaction (6,7) disposées de part et d'autre du voile (4) en étant encadrées par les rondelles de guidage (2,3), des seconds organes élastiques (8,81), au moins en partie de plus faible raideur que les premiers organes élastiques (5,50), interposés circonférentiellement entre les plaques de réaction (6,7) et le voile (4), des moyens d'entraînement (9) intervenant entre des plaques de réaction (6,7) et au moins une partie des premiers organes élastiques (5), des moyens de frottement (10) à serrage élastique intervenant axialement entre les rondelles de guidage (2,3) et les plaques de réaction (6), 7, un élément de sortie (11) sous forme d'un moyeu solidaire du voile (4) en étant entouré de manière rotative par les rondelles de guidage (2,3) et les plaques de réaction (6,7), dans lequel les seconds organes élastiques (8,81) sont implantés radialement en dessous des premiers organes élastiques (5), et dans lequel les moyens de frottement (10) à serrage élastique, comportent au moins une première rondelle élastique à action axiale (36,236), qui sollicitent axialement les plaques de réaction (6,7) en direction du voile (4) pour induire un frottement entre lesdites plaques (6,7) et le voile (4), en sorte que les plaques de réaction (6,7) sont distinctes l'une de l'autre, caractérisé en ce que chaque plaque de réaction (6,7) est en contact de frottement avec une rondelle de frottement (31-35,135-40,...) calée en rotation sur la rondelle de guidage (2,3) concernée, en ce que ladite première rondelle élastique (36-236) est interposée axialement entre l'une des rondelles de guidage (2,3), dite première rondelle de guidage (3), et l'une des rondelles de frottement (35,135 ...), dite, première rondelle de frottement, en ce que l'autre rondelle de frottement (31,40,131 ...), dite seconde rondelle de frottement, est calée axialement sur l'autre rondelle de guidage (2), dite seconde rondelle de guidage, et appartient à une entretoise de frottement (40) comportant un empilage de rondelle (30,32,33-...) dont l'une (30) constitue une troisième rondelle de frottement et est propre à venir en prise avec le voile (4) pour induire un frottement au contact de la deuxième rondelle de guidage (2) ou de la deuxième rondelle de frottement (31,40,131, ...) et en ce que la troisième rondelle de frottement est soumise à l'action d'au moins une seconde rondelle élastique à action axiale (33,133,233,...) agissant axialement entre la seconde rondelle de frottement (31,40,131,...) et la seconde rondelle de guidage (2).

2. Amortisseur de torsion selon la revendication 1, caractérisé en ce que les plaques de réaction (6,7) sont entièrement en matière plastique.

3. Amortisseur de torsion selon la revendication 1 ou 2, caractérisé en ce que la troisième rondelle de frottement (30) comporte, à sa périphérie externe, au moins une fourche à deux pattes radiales (38) avec des plis (39) perpendiculaires au plan de ladite rondelle pour venir en prise avec les extrémités circonférentielles d'un ressort appartenant auxdits premiers organes élastiques (5), lesdits plis (39) étant propres à être actionnés de manière différée par le voile (4).

4. Amortisseur de torsion selon la revendication 3, caractérisé en ce que ladite entretoise de frottement (40) appartient à une cassette d'hystérésis calée en rotation sur la seconde rondelle de guidage (2,3) et formant un sous-ensemble unitaire avec ladite seconde rondelle de guidage par l'intermédiaire de la seconde rondelle élastique à action axiale (33,133, ...), sollicitant la troisième rondelle de frottement (30,130) et la seconde rondelle de frottement (31,131,...) en direction de la seconde rondelle de guidage (2,3).

5. Amortisseur de torsion selon la revendication 4, caractérisé en ce que la seconde rondelle élastique (33,133,233,433,533) est montée à l'extérieur du volume délimité par les rondelles de guidage (2,3) et prend appui sur la seconde rondelle de guidage (2,3) et sur un épaulement appartenant à la seconde rondelle de frottement (31,131,231,431,531) propre à venir en contact avec la plaque de réaction.

6. Amortisseur de torsion selon la revendication 5, caractérisé en ce que la seconde rondelle élastique (333) est montée à l'intérieur du volume délimité par les rondelles de guidage (2,3) et consistent en des pattes élastiques issues de la périphérie interne d'un disque (1), formant l'élément d'entrée, pour sollicitation de la seconde rondelle de frottement (331), en direction de la seconde rondelle de guidage (2).

7. Amortisseur de torsion selon la revendication 5 ou 6, caractérisé en ce que la seconde rondelle de frottement appartient à un palier (31,131,231,331,431) calé en rotation sur la rondelle de guidage en étant montée sur la périphérie externe du moyeu (11).

8. Amortisseur de torsion selon la revendication 7, caractérisé en ce que la seconde rondelle élastiques est propre à prendre appui sur ledit palier.

## Patentansprüche

1. Torsionsdämpfer, insbesondere Kupplungsreibscheibe für Kraftfahrzeuge, der ein Eingangselement (1), zwei mit dem Eingangselement (1) verbundene Führungsscheiben (2, 3), einen ringförmigen Flansch (4), der von den Führungsscheiben (2, 3) eingefaßt ist, erste elastische Elemente (5, 50), die einerseits in Umfangsrichtung zwischen dem Flansch (4) und den Führungsscheiben (2, 3) vorgesehen sind und andererseits von den Führungsscheiben (2, 3) getragen werden, wobei sie mit Spiel in ersten Ausbrüchen (25, 26, 125) des Flanschs (4) montiert sind, Reaktionsscheiben (6,7) die zu beiden Seiten des Flanschs (4) vorgesehen sind, wobei sie von den Führungsscheiben (2, 3) eingefaßt sind, zweite elastische Elemente (8, 81), die wenigstens teilweise eine geringere Steifigkeit als die ersten elastischen Elemente (5, 50) aufweisen und die in Umfangsrichtung zwischen den Reaktionsscheiben (6, 7) und dem Flansch (4) vorgesehen sind,
Mitnahmemittel (9), die zwischen den Reaktionsscheiben (6, 7) und wenigstens einem Teil der ersten elastischen Elemente (5) eingreifen, Reibmittel (10) zum elastischen Klemmen, die axial zwischen den Führungsscheiben (2, 3) und den Reaktionsscheiben (6, 7) wirken, ein Ausgangselement (11), das die Form einer mit dem Flansch (4) verbundenen Nabe aufweist, wobei es drehbar von den Führungsscheiben (2, 3) und den Reaktionsscheiben (6, 7) umgeben ist, umfaßt, in dem die zweiten elastischen Elemente (8,81) radial unterhalb der ersten elastischen Elemente (5) eingefügt sind und in dem die Reibmittel (10) zum elastischen Klemmen wenigstens eine erste elastische Scheibe mit axialer Wirkung (36, 236) umfassen, die die Reaktionsscheiben (6, 7)axial in Richtung des Flanschs (4) führen, um eine Reibung zwischen den Scheiben (6, 7) und dem Flansch (4) hervorzurufen, so daß die Reaktionsscheiben (6, 7) voneinander unabhängig sind, **dadurch gekennzeichnet**, daß sich jede Reaktionsscheibe (6, 7) in Reibkontakt mit einer Reibscheibe (31-35, 135-40...) befindet, die drehfest auf der betroffenen Führungsscheibe (2,3) festsitzt, daß die erste elastische Scheibe (36-236) axial zwischen einer der Führungsscheiben (2, 3) - mit erster Führungsscheibe (3) bezeichnet - und einer der Reibscheiben (35, 135...) - mit erster Reibscheibe bezeichnet - angeordnet ist, daß die andere Reibscheibe (31, 40, 131) - mit zweiter Reibscheibe bezeichnet - axial auf der anderen Führungsscheibe (2, 3) - mit zweiter Führungscheibe bezeichnet - festsitzt und zu einem Reibzwischenelement (40) gehört, das einen Scheibenstapel (30, 32, 33-...) umfaßt, von dem eine Scheibe (30) eine dritte Reibscheibe darstellt, die mit dem Flansch (4) in Eingriff kommen kann, um eine Reibung beim Kontakt mit der zweiten Führungsscheibe (2, 3) oder mit der zweiten Reibscheibe (31, 40, 131...) hervorzurufen und daß auf die dritte Reibscheibe wenigstens eine zweite elastische Scheibe (33, 133, 233,...) axial wirkt, die axial zwischen der zweiten Reibscheibe (31, 40, 131,...) und der zweiten Führungsscheibe (2, 3) wirkt.

2. Torsionsdämpfer nach Anspruch 1, **dadurch gekennzeichnet**, daß die Reaktionsscheiben (6, 7) vollständig aus Kunststoff gefertigt sind.

3. Torsionsdämpfer nach Anspruch 1 oder 2, **dadurch gekennzeichnet**, daß die dritte Reibscheibe (30) auf ihrem Außenrand wenigstens eine Gabel mit zwei radialen Vorsprüngen (38) mit Falzen (39) umfaßt, die senkrecht zur Ebene der Scheibe verlaufen, um mit dem äußeren Umfang einer zu den ersten elastischen Elementen (5) gehörenden Feder in Eingriff zu kommen, wobei die Falze (39) in unterschiedlicher Weise vom Flansch (4) betätigt werden können.

4. Torsionsdämpfer nach Anspruch 3, **dadurch gekennzeichnet**, daß das Reibzwischenelement (40) zu einer Hysteresekassette gehört, die drehfest auf der zweiten Führungsscheibe (2, 3) sitzt und eine Untereinheit zusammen mit der zweiten Führungsscheibe über die zweite elastische Scheibe mit axialer Wirkung (33, 133,...) bildet, wobei die dritte Reibscheibe (30, 130) und die zweite Reibscheibe 31, 131,...) in Richtung der zweiten Führungsscheibe (2, 3) geführt wird.

5. Torsionsdämpfer nach Anspruch 4, **dadurch gekennzeichnet**, daß die zweite elastische Scheibe (33, 133, 233, 433, 533) außerhalb des von den Führungsscheiben (2, 3) eingegrenzten Raums montiert ist und auf der zweiten Führungsscheibe (2, 3) und auf einem zur zweiten Reibscheibe (31, 131, 231, 431, 531) gehörenden Vorsprung aufliegt, der mit der Reaktionsscheibe in Kontakt treten kann.

6. Torsionsdämpfer nach Anspruch 5, **dadurch gekennzeichnet**, daß die zweite elastische Scheibe (233) im Inneren des Raums montiert ist, der von den Führungsscheiben (2, 3) eingegrenzt ist, die elastische Laschen umfassen, die aus dem inneren Umfang einer Scheibe (1) stammen, die das Eingangselement bildet, zur Führung der zweiten Reibscheibe (331) in Richtung der zweiten Führungsscheibe (2).

7. Torsionsdämpfer nach Anspruch 5 oder 6, **dadurch gekennzeichnet**, daß die zweite Reibscheibe zu einem Lager (31, 131, 231, 331, 431) gehört, das drehfest auf der Führungsscheibe festsitzt, wobei letztere auf dem Außenrand der Nabe (11) montiert ist.

8. Torsionsdämpfer nach Anspruch 7, **dadurch gekennzeichnet**, daß die zweite elastische Scheibe auf dem Lager aufliegen kann.

## Claims

1. A torsion damper, in particular a clutch friction disc for a motor vehicle, comprising an input element (1), two guide rings (2,3) fixed to the input element (1), an annular damper plate (4) flanked by the guide rings (2,3), first resilient members (5,50), interposed circumferentially between the damper plate (4) and the guide rings (2,3) on the one hand, and on the other hand carried by the guide rings (2,3), being mounted with a clearance in first seatings (25,26,125) of the damper plate (4), reaction plates (6,7) disposed on either side of the damper plate (4), being flanked by the guide rings (2,3), second resilient members (8,81), which are, at least partly, less stiff than the first resilient members (5,50), and which are interposed circumferentially between the reaction plates (6,7) and the damper plate (4), drive means (9) interposed operatively between the reaction plates (6,7) and at least part of the first resilient members (5), friction means (10) for resilient gripping action, interposed axially between the guide rings (2,3) and the reaction plates (6,7), an output element (11) in the form of a hub fixed to the damper plate (4) and surrounded rotatively by the guide rings (2,3) and the reaction plates (6,7), wherein the second resilient members (8,81) are fitted radially inwardly of the first resilient members (5), and wherein the friction means (10) for resilient gripping action comprise at least one first axially acting resilient ring (36,236), which urges the reaction plates (6,7) axially towards the damper plate (4) so as to induce friction between the said plates (6,7) and the damper plate (4), being such that the reaction plates (6,7) are distinct from each other, characterised in that each reaction plate (6,7) is in frictional contact with a friction ring (31-35, 135-40,...) which is mounted in rotation on the guide ring (2,3) concerned, in that the said first resilient ring (36-236) is interposed axially between one of the guide rings (2,3), referred to as the first guide ring (3), and one of the friction rings (35,135...), referred to as the first friction ring, in that the other friction ring (31,40,131...), referred to as the second friction ring, is mounted axially on the other guide ring (2), referred to as the second guide ring, and is part of a frictional spacer (40) which comprises a stack of rings (30,32,33-...), one of which (30) constitutes a third friction ring and is adapted to come into engagement with the damper plate (4) so as to induce friction in contact with the second guide ring (2) or the second friction ring (31,40,131,...), and in that the third friction ring is subjected to the action of at least one second axially acting resilient ring (33,133,233,...) working axially between the second friction ring (31,40,131,...) and the second guide ring (2).

2. A torsion damper according to Claim 1, characterised in that the reaction plates (6,7) are entirely of plastics material.

3. A torsion damper according to Claim 1 or Claim 2, characterised in that the third friction ring (30) comprises, at its outer periphery, at least one fork having two radial lugs (38) with bends (39) at right angles to the plane of the said ring, so as to come into engagement with the circumferential ends of a spring which is part of the said first resilient members (5), with the said bends (39) being adapted so as to be actuated differentially by the damper plate (4).

4. A torsion damper according to Claim 3, characterised in that the said frictional spacer (40) is part of a hysteresis cassette which is mounted in rotation on the second guide ring (2,3), and which constitutes a unitary sub-assembly with the said second guide ring through the interposed second axially acting resilient ring (33,133,...), urging the third friction ring (30,130) and the second friction ring (31,131,...) towards the second guide ring (2,3).

5. A torsion damper according to Claim 4, characterised in that the second resilient ring (33,133,233,433,533) is mounted outside the volume bounded by the guide rings (2,3), and engages on the second guide ring (2,3) and on a shoulder which is part of the second friction ring (31,131,231,431,531) adapted to make contact with the reaction plate.

6. A torsion damper according to Claim 5, characterised in that the second resilient ring (333) is mounted within the volume bounded by the guide rings (2,3), and consists of resilient lugs projecting from the inner periphery of a disc (1) which constitutes the input element, so as to bias the second friction ring (331) towards the second guide ring (2).

7. A torsion damper according to Claim 5 or Claim 6, characterised in that the second friction ring is part of a bearing (31,131,231,331,431) which is mounted in rotation on the guide ring by being mounted on the outer periphery of the hub (11).

8. A torsion damper according Claim 7, characterised in that the second resilient ring is adapted to engage on the said bearing.
